# EUROPEAN PATENT APPLICATION

(11) **EP 1 914 675 A1**
(43) Date of publication of application: **23.04.2008**
(21) Application number: 06782258.5
(22) Date of filing: 03.08.2006
(51) Int. Cl.: G06Q 20/00, G06Q 10/00, G06Q 30/00, G06Q 40/00

(54) **ELECTRONIC SETTLEMENT SYSTEM, METHOD THEREFOR, SETTLEMENT SERVER USED THEREIN, COMMUNICATION TERMINAL, AND PROGRAM**

(30) Priority: 05.08.2005 JP 2005227591
(71) Applicant: NEC CORPORATION, Minato-ku, Tokyo 108-0014 (JP)
(72) Inventor: FUJITA, Naotake, Minato-ku, Tokyo 1080014 (JP); TOMIYAMA, Takuji, Minato-ku, Tokyo 1080014 (JP); SAKAGUCHI, Yasuhiko, Minato-ku, Tokyo 1080014 (JP); MISU, Toshiyuki, Minato-ku, Tokyo 1080014 (JP)
(74) Representative: Betten & Resch
(86) International application number: PCT/JP2006/315398
(87) International publication number: WO 2007/018119

(57) **Abstract**

A secure, inexpensive, convenient payment system which allows an existing communication to be used to make an expensive payment terminal unnecessary, makes local communication unnecessary to make it possible to use the system by a seller and a buyer, uses closed-loop type electronic money to make it possible to make payment on delivery is obtained. An account database 6 which is arranged as equipment of a communication carrier and manages accounts of sellers and buyers (users), and a payment server 5 which is arranged as equipment of the communication carrier and performs an electronic payment process between the seller and the buyer are arranged. In the payment server 5, a primary payment server 3 and a secondary payment server 4 are arranged. When a payment request from a user is received through a communication network 1.0, the primary payment server 3 refers to the account database 6 to perform a real-time payment process by electronic money as primary payment between accounts of the seller and the buyer. Secondary payment is performed between the financial institution server 13 and the secondary payment server 4 in a predetermined period of time thereafter.

## Description

### TECHNICAL FIELD

The present invention relates to a system and method for electronic payment and a payment server, a communication terminal, and a program used therein and more particularly, to a mobile electronic payment system using a mobile communication terminal.

### BACKGROUND ART

In a conventional mobile payment system, an example described in Patent Document 1 is known. This conventional mobile payment system, as shown in FIG. 18, is constituted by a mobile telephone set of a customer C, an electric communication device of a trader M, an electric communication device of a gateway P of a communication carrier, and a bank B.

The conventional mobile payment system having the above configuration operates as described below. More specifically, the trader M transmits data for regulating service provision with total amount to be paid by a customer to the gateway P, and identification data of the trader is added to the data. The gateway P authenticates a trader, converts the provided data into a message matched with the performance of the mobile device of the customer C, and transmits the message to the customer C together with authentication data of the gateway P.

The customer C authenticates the gateway P and returns an agreement message to the gateway together with information which makes it possible that the bank can settle an aggregate payment. The gateway P authenticates the customer C, verifies that the payment is possible, and transmits a message which contracts that the aggregate payment can be completely settled to the trader M.

Referring to Patent Document 2, there is proposed a system performs communication between a mobile terminal and an automatic vending machine by using a local interface such as short-range communication (infrared communication or short-range wireless communication) to transmit ID (identification) information of a mobile terminal, article price information, and the like from the automatic vending machine to a communication carrier together with the ID information of a distributor, and on the communication carrier side, on the basis of the information transmitted from the automatic vending machine, makes payment by using an accounting process for communication with the communication carrier.

Referring to Patent Document 3, there is proposed a system in which a user accesses a shopping mall by using a mobile terminal to purchase an article, and a shopping agent mediates to account the price on an accounting server for charge a communication network of the communication carrier, so that payment is made by using an accounting process for communication.

Furthermore, referring to Patent Document 4, there is proposed a system in which a group purchase management server is arranged, and it is possible to select whether primary payment (article delivery in advance) or payment in advance when an article is purchased by a group, and, when delivery in advance is selected, a purchaser is notified of a primary payment number, and a group purchase management server requests a payment institution to make secondary payment when the purchaser requests the secondary payment by the primary payment number.

[Patent Document 1] Japanese Patent Application National Publication No. 2002-537618
[Patent Document 2] JP-A No. 2001-134684
[Patent Document 3] JP-A No. 2001-290944
[Patent Document 4] JP-A No. 2002-288484

### DISCLOSURE OF THE INVENTION

In a mobile payment system between distant places disclosed in Patent Document 1 shown in FIG. 18, private information such as a telephone number, a card number, an account identification code, and the like of a seller or a buyer flows through an insecure communication network such as the Internet and managed by an insufficiently reliable trader or the like including the seller or the buyer. For this reason, if the information is encrypted, the private information may leak. In addition, in order to make payment, systems of a plurality of companies such as a payment company which manages a payment server, correspondent financial institutions of the seller and the buyer, and a credit information supplier are used. For this reason, these systems must correctly operate, payment processability and the availability of the entire payment system are not sufficient.

Since an expensive payment terminal is required to make payment, a place and time at which payment can be made are limited, high cost is required to construct and operate a payment system, and long time is disadvantageously required to popularize the payment system. In addition, since information such as a telephone number or an electronic mail address for mutual communication is shared by a seller and a buyer, privacy cannot be easily secured.

Although various payment methods such as prepaid payment, debit payment, and credit payment can be used, one of the payment methods must be determined in payment, a plurality of payment methods cannot be combined to each other, and a payment method cannot be changed afterward.

In the system in Patent Document 2, between a mobile terminal and an automatic vending machine, communication is performed by using a local interface for short-range communication. For this reason, a seller and a buyer must be at the same place. In this system, as a payment system for purchasing an article, a communication accounting account (for communication fee) of a communication carrier is also used. However, although as the payment method, various payment methods such as prepaid payment, debit payment, and credit payment can be used, the charge is added to a communication charge and requested. As a result, diversity of payment is poor.

In the system in Patent Document 3, an intermediation role called a shopping agent must be disadvantageously arranged. In a payment method for purchasing an article, as in Patent Document 1, an account is also used for communication charge of a communication carrier. For this reason, the payment method disadvantageously has a low degree of freedom. Furthermore, in the system in Patent Document 4, when a purchaser selects primary payment, an article is delivered in advance. After the delivery in advance, secondary payment for paying a price is made. This payment is made through a financial institution as in a conventional system, and a group purchase management server and a mail server are disadvantageously necessary.

It is an object of the present invention to provide a secure, inexpensive system and method for electronic payment in which a payment server is arranged as equipment for a communication carrier to secure security and reliability, a general-purpose system which can use an existing communication terminal is achieved to make an expensive payment terminal unnecessary, payment is divided into two steps consisting of primary payment and secondary payment to increase an apparent speed of a payment process, a local interface is made unnecessary to make it possible that a seller and a buyer use the system, and closed-loop type electronic money is used to make it possible to make payment on delivery, a payment server, a communication terminal, and a program used in the system and the method.

An electronic payment system according to the present invention is an electronic payment system which performs an electronic payment process between users through a communication network, including a database which manages accounts for deposit/withdrawal information of the users; and a payment server which performs a payment process between the users, and wherein the payment server has primary payment means which, when the payment server receives a payment request from a communication terminal of the user through the communication network, refers to the accounts of the database to perform an electronic money payment process as primary payment between the users.

An electronic payment method according to the present invention is an electronic payment method which performs an electronic payment process between users through a communication network, a database which manages accounts for deposit/withdrawal information of the users and a payment server which performs a payment process between the users being arranged, including the step of, in the payment server, receiving a payment request from a communication terminal of the user through the communication network; and the primary payment step which performs an electronic money payment process as primary payment between the users in response to receiving of the payment request with reference to the accounts of the database.

A payment server according to the present invention is a payment server in an electronic payment system which performs an electronic payment process between users through a communication network, including primary payment means which, when the payment server receives a payment request from a communication terminal of the user through the communication network, refers to accounts of a database which manages accounts for deposit/withdrawal information of the users to perform an electronic money payment process as primary payment between the users.

A communication terminal according to the present invention is a user communication terminal in a payment system which, when a payment server which makes electronic payment between users receives a payment request from a communication terminal of the user through the communication network, refers to accounts of a database which manages accounts for deposit/withdrawal information of the users to perform an electronic money payment process as primary payment between the users, including means for transmitting a payment request including user identification information or payment amount information to the payment server through the communication network.

A program according to the present invention is a program to cause a computer to execute an operation of a payment server in an electronic payment system which performs an electronic payment process between users through a communication network, includes a process which, when the payment server receives a payment request from a communication terminal of the user through the communication network, refers to accounts of a database which manages accounts for deposit/withdrawal information of the users, and a primary payment process constituting an electronic money payment process serving as primary payment between users.

Another program according to the present invention is a program to cause a computer to execute an operation of a communication terminal in a payment system in which, when a payment server which makes electronic payment between users receives a payment request from a communication terminal of the user through the communication network, refers accounts of a database which manages accounts for deposit/withdrawal information of the users to perform an electronic money payment process serving as primary payment between the users, including a process which transmits a payment request including user identification information or payment amount information to the payment server through the communication network.

### EFFECT OF THE INVENTION

It is a first effect according to the present invention that payment can be made at a high speed with high reliability This is because a payment process is divided into a primary payment process and a secondary payment process through an account database and constituted such that operations of a seller and a buyer are completed by execution of the primary payment process.

It is a second effect according to the present invention that payment can be securely made. This is because an unsecured communication network such as the Internet is not present between a communication terminal and a payment server, an unreliable trader or the like is not allowed to stand between the communication terminal and the payment server except for a communication carrier, a seller, and a buyer.

It is a third effect according to the present invention that payment methods can be flexibly changed. This is because a payment process is divided into a primary payment process and a secondary payment process through an account database to make it possible to make secondary payment at a timing different from that of first payment.

### BRIEF DESCRIPTION OF DRAWINGS

FIG. 1 is a system block diagram of an embodiment of the present invention.
FIG. 2 is a schematic functional block diagram of a seller terminal 11 in FIG. 1.
FIG. 3 is a schematic functional block diagram of a buyer terminal 12 in FIG. 1.
FIG. 4 is a schematic functional block diagram of a primary payment server 3 in FIG. 1.
FIG. 5 is a schematic functional block diagram of a secondary payment server 4 in FIG. 1.
FIG. 6 is a diagram showing a part of an operation of the embodiment of the present invention.
FIG. 7 is a diagram showing a part of an operation of the embodiment of the present invention.
FIG. 8 is a diagram showing a concrete example of primary payment of an embodiment of the present invention.
FIG. 9 is a diagram showing a concrete example of secondary payment according to an embodiment of the present invention.
FIG. 10 is a system block diagram of another embodiment of the present invention.
FIG. 11 is a diagram showing a part of an operation of another embodiment of the present invention.
FIG. 12 is a diagram showing a part of the operation of another embodiment of the present invention.
FIG. 13 is a system block diagram of still another embodiment of the present invention.
FIG. 14 is a system block diagram of the other embodiment of the present invention.
FIG. 15 is a schematic functional block diagram of an automatic vending machine 16 in FIG. 14.
FIG. 16 is a diagram showing an operation of the other embodiment of the present invention in FIG. 14.
FIG. 17 is a diagram showing an operation of a modification of FIG. 16.

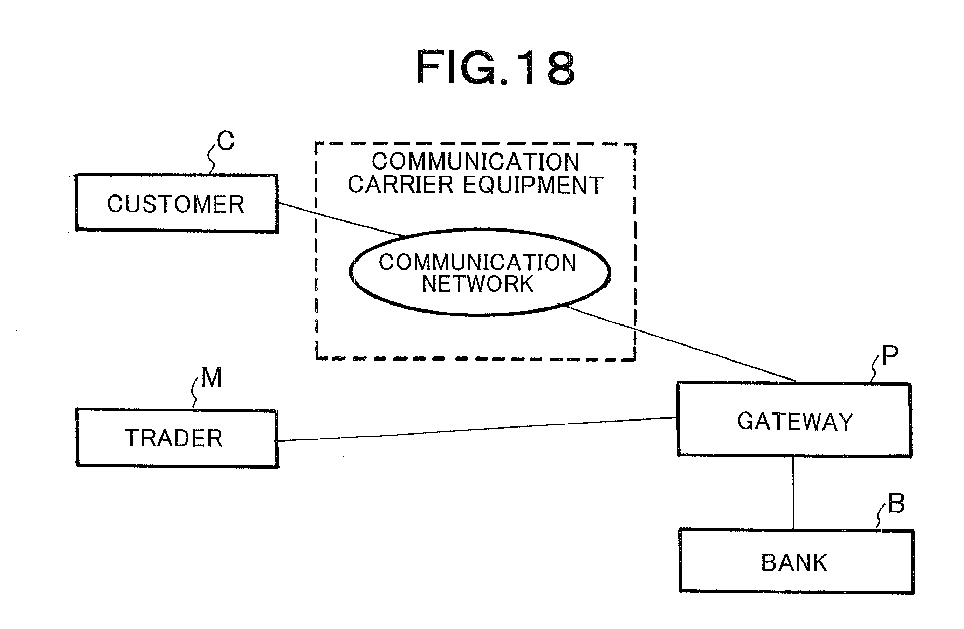

FIG. 18 is a system block diagram showing a conventional technique.

### DESCRIPTION OF REFERENCE NUMERALS

- 1: authentication server
- 2: credit server
- 3: primary payment server
- 4: secondary payment server
- 5: payment server
- 6: account database
- 7: communication carrier equipment
- 10: communication network
- 11: seller terminal
- 12: buyer terminal
- 13: financial institution (server)
- 14: Web server
- 15: Internet
- 16: automatic vending machine

### BEST MODE FOR CARRYING THE INVENTION

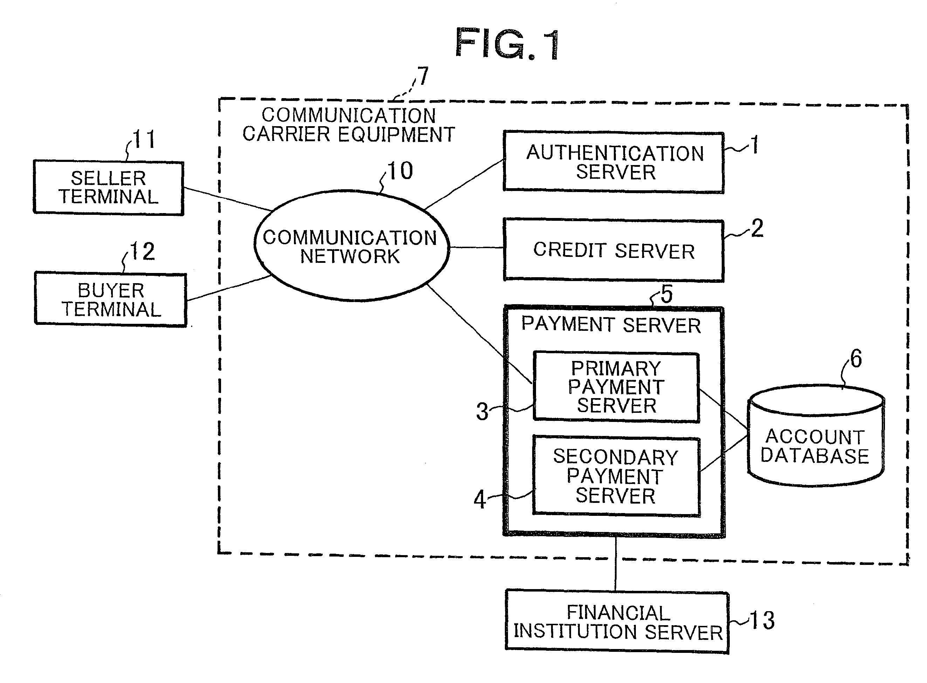

An embodiment of the present invention will be described below with reference to the accompanying drawings. Referring to FIG. 1, the embodiment according to the present invention is constituted by a seller terminal 11, a buyer terminal 12, communication carrier equipment 7, and a financial institution 13. The communication carrier equipment 7 has a communication network 10 such as mobile communication network, an authentication server 1, a credit server 2, a payment server 5, and an account database 6. The payment server 5 has a primary payment server 3 and a secondary payment server 4. All the communication network 10, the servers 1, 2, and 5, and the account database 6 are operated and managed by a communication carrier.

The seller terminal 11 and the buyer terminal 12 are mobile communication terminals having communication functions. The terminals 11 and 12, the authentication server 1, the credit server 2, the primary payment server 3, and the secondary payment server 4 are operated by program control and connected to each other through the communication network 10 such as a mobile communication network.

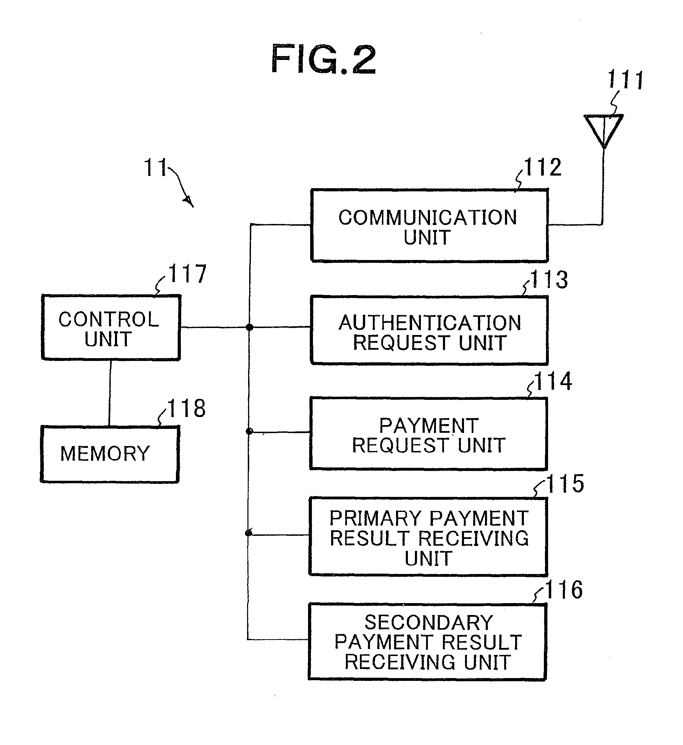

The seller terminal 11, as shown in FIG. 2 as the schematic functional block diagram, includes a communication unit 112 which can communicate with the communication network 10 through an antenna 111, an authentication request unit 113 which requests the authentication server 1 of a communication carrier device to authenticate a seller, a payment request unit 114 which notifies the primary payment server 3 of the communication carrier device of a payment request, a primary payment result receiving unit 115 which receives a primary payment result from the primary payment server 3 of the communication carrier device, a secondary payment result receiving unit 116 which receives a secondary payment result from the secondary payment server 4 of the communication carrier device, a control unit 117 which controls these units, and a memory 118 which operates a working memory of the control unit 117 and stores a control operation procedure of the control unit as a program.

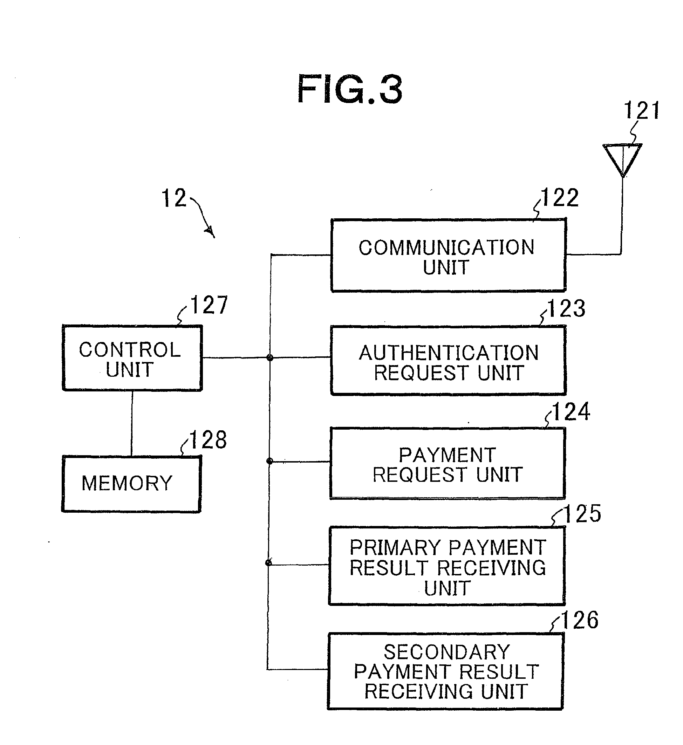

The buyer terminal 12, as shown in FIG. 3 as the schematic functional block diagram, includes a communication unit 122 which can communicate the communication network 10 through an antenna 121, an authentication request unit 123 which requests the authentication server 1 of the communication carrier device to authenticate a buyer, a payment request unit 124 which notifies the primary payment server 3 of the communication carrier device of a payment request, a primary payment result receiving unit 125 which receives a primary payment result from the primary payment server 3 of the communication carrier device, a secondary payment result receiving unit 126 which receives a secondary payment result from the secondary payment server 4 of the communication carrier device, a control unit 127 which controls the respective units, and a memory 128 which operates as a working memory of the control unit 127 and stores a control operation procedure of the control unit as a program.

The authentication server 1 has an authentication unit which receives authentication request from the communication terminals 11 and 12 of the seller and the buyer to authenticate the seller and the buyer. The credit server 2 has a credit unit which receives a credit request from the primary payment server 3 of the communication carrier device to credit the buyer. The account database 6 manages accounts of the seller and the buyer for primary payment in the communication carrier.

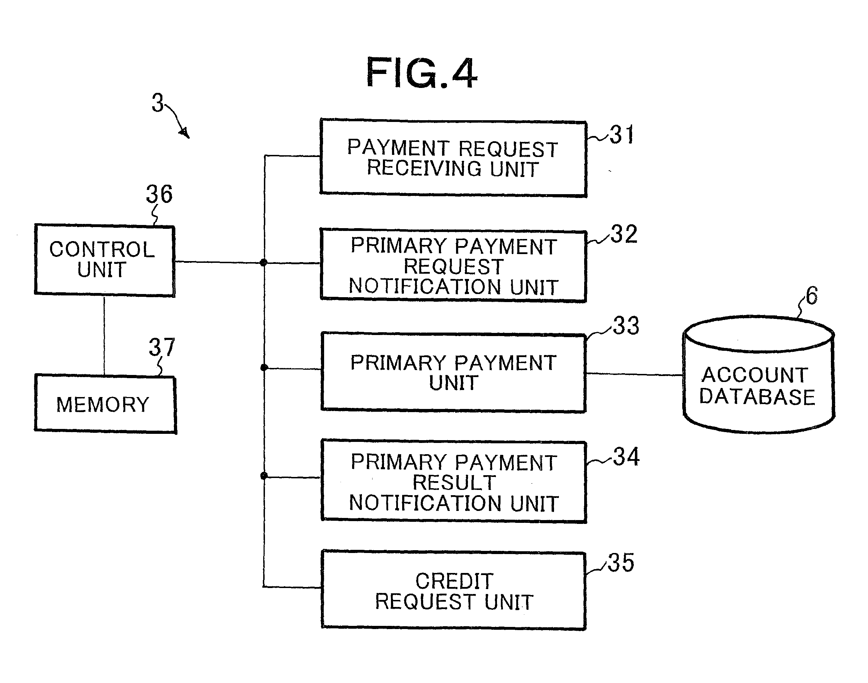

The primary payment server 3, as shown in FIG. 4 as the schematic functional block diagram, includes a payment request receiving unit 31 which receives payment requests from the communication terminals of the seller and the buyer, a primary payment request notification unit 32 which notifies the communication terminals of the seller or the buyer of a primary payment request, a primary payment unit 33 which performs a primary payment transaction to the account database 6 of the communication carrier device, a primary payment result notification unit 34 which notifies the communication terminal of the seller or the buyer of a primary payment result, a credit request unit 35 which requests the credit server 2 of the communication carrier device to perform credit, a control unit 36 which controls the respective units, and a memory 37 which operates as a working memory of the control unit 36 and stores a control operation procedure of the control unit as a program.

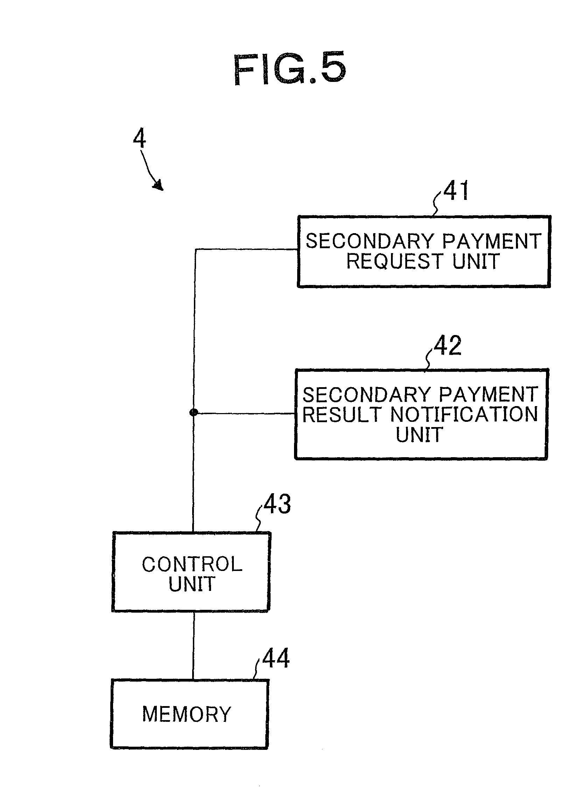

The secondary payment server 4, as shown in FIG. 5 as the schematic functional block diagram, includes, a secondary payment request unit 41 which requests the financial institution 13 to make secondary payment, a secondary payment result notification unit 42 which notifies the communication terminals of the seller and the buyer of a secondary payment result, a control unit 43 which controls the respective units, and a memory 44 which operates as a working memory of the control unit 43 and stores a control operation procedure of the control unit as a program. The financial institution 13 has a function of making secondary payment on the basis of the request from the secondary payment server 4.

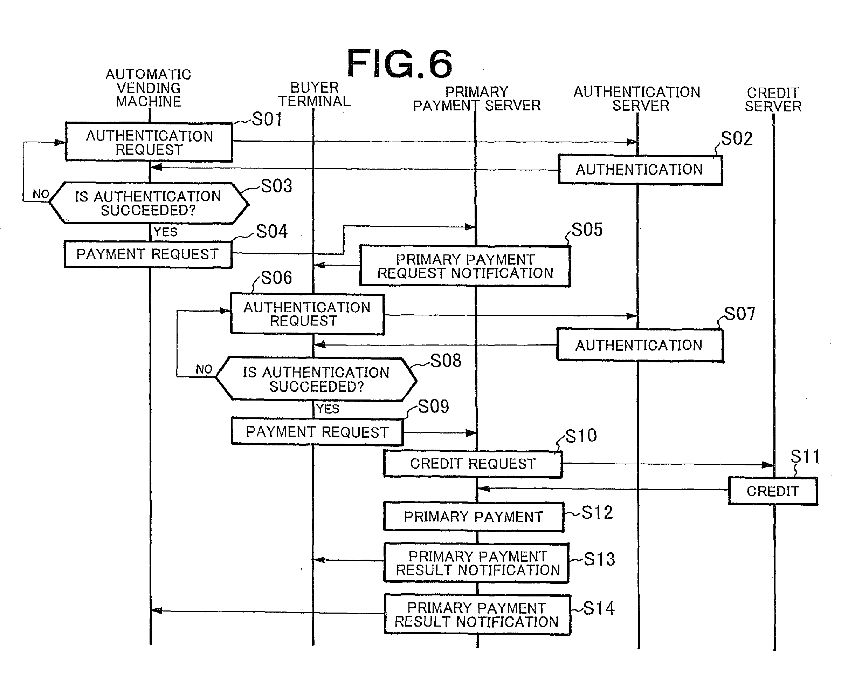

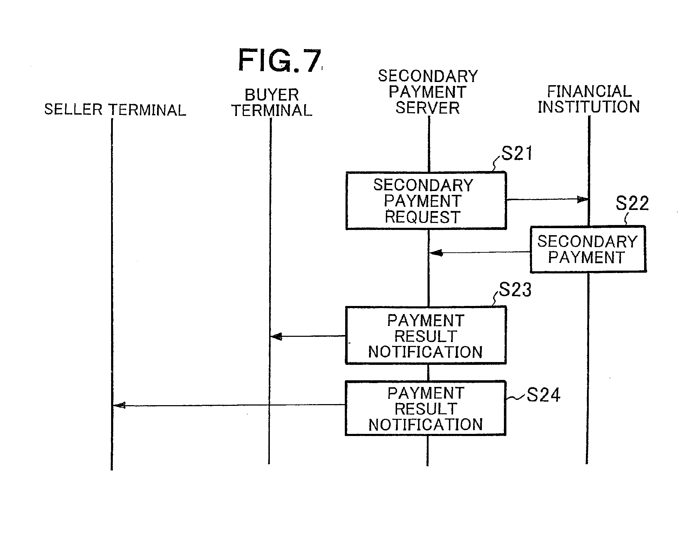

An operation of the embodiment of the present invention will be described below in detail with reference to the flow charts in FIGS. 6 and 7. The terminal 11 of the seller requests the authentication server 1 of the communication carrier device to authenticate the seller (step S01). The authentication server 1 of the communication carrier device authenticates the seller (step S02). An authentication result obtained at this time is transmitted from the authentication server 1 to the communication terminal 11 of the seller. However, if authentication is not succeeded, the communication terminal 11 of the seller requests authentication again (steps S03 and S01).

If the authentication is succeeded, the communication terminal 11 of the seller notifies the primary payment server 3 of the communication carrier device of a payment request (step S04). The primary payment server 3 of the communication carrier device notifies the buyer terminal 12 of a primary payment request in response to a payment request from the communication terminal 11 of the seller (step S05). At this time, private information of the seller is minimized. For example, the communication carrier device is notified of only an identification name such as a company name of the seller and information for proving that the identification name is the true name of the seller.

The communication terminal 12 of the buyer requests the authentication server 1 of the communication carrier device to authenticate the buyer (step S06). The authentication server 1 of the communication carrier device authenticates the buyer (step S07). The authentication server 1 notifies the communication terminal 12 of the buyer of an authentication result obtained at this time. If the authentication is not succeeded, the communication terminal 12 of the buyer requests authentication again (step S08 and S06).

When the authentication succeeded, the communication terminal 12 of the buyer notifies the primary payment server 3 of the communication carrier device of a payment request (step S09). In response to the payment request notification, the primary payment server 3 of the communication carrier device requests the credit server 2 to credit the buyer (step S10). the credit server 2 of the communication carrier device credit the buyer (step S11) and performs a primary payment transaction to the account database 6 of the communication carrier device (step S12).

The primary payment server 3 of the communication carrier device notifies the communication terminal 12 of a primary payment result by the primary payment transaction (step S13) and notifies the communication terminal 11 of the seller of the primary payment result (step S14).

After the primary payment process consisting of the above steps are repeatedly performed a predetermined number of times, the secondary payment server 4 of the communication carrier device requests the financial institution 13 to make secondary payment (step S21). The financial institution 13 makes secondary payment (step S22) and notifies the secondary payment server 4 of the communication carrier device of the secondary payment result. The secondary payment server 4 notifies the communication terminal 12 of the buyer of the secondary payment result (step S23). Finally, the secondary payment server 4 of the communication carrier device notifies the communication terminal 11 of the seller of the secondary payment result (step S24).

As the terminals 11 and 12 of the seller and buyer in the above embodiment, mobile communication terminals typified by mobile telephones can be used. When the mobile telephone is used, a mobile telephone using an SIP (Session Initiation Protocol) can be used (merits obtained by using the SIP will be described later). As the communication terminal 11 of the seller, a POS (Point Of Sales) terminal, an automatic vending machine, and the like can be used. Furthermore, a Web site on the Internet can also be used. As an example of an authentication method in an authentication server, a terminal device authentication, customer ID authentication, password authentication, private certification authentication, biometric identification, or the like can be conceived.

In the operation sequence diagram shown in FIG. 6, as the seller terminal 11, for example, a POS terminal in a store is set, and as a buyer terminal, a mobile telephone held by a general shopper. When the money amount of an article is input in the POS terminal, the POS terminal is authenticated, and the buyer mobile telephone is notified of the information. For this reason, the buyer performs a payment request with the mobile telephone to authenticate and credit the mobile telephone. Thereafter, primary payment is made, and the POS terminal and the mobile telephone are notified of the primary payment result. At this time, the POS terminal must be recognize identification information of the buyer. For this purpose, the POS terminal may read a membership number written in a membership card or a reward card to convert the membership number into identification information.

In the embodiment, the system is designed to be operated by an existing communication terminal without an expensive payment terminal for making payment except for a case in which a communication terminal of a seller is a POS terminal. For this reason, a place and time at which payment can be made are not easily limited, and the payment system can operate at low cost. A problem of long time required for popularizing a payment system can be solved. In particular, when a popularized mobile telephone is used as a communication terminal, the effect is conspicuous.

In the embodiment, a payment transaction is divided into a primary payment transaction and a secondary payment transaction through an account database in a communication carrier, so that operations of a seller and a buyer are completed by executing only the primary payment transaction in the communication carrier. For this reason, the transaction performance of payment viewed from the seller or the buyer can be improved, and the availability of the payment system can be improved.

In the embodiment, as the communication carrier equipment 7 of a single communication carrier, equipment includes the authentication server 1, the credit server 2, the payment server 5, and the account database 6. For this reason, an unsecured communication network such as the Internet is not present between a communication terminal and a payment server, an unreliable trader or the like is not allowed to stand between the communication terminal and the payment server except for the communication carrier, the seller, and the buyer. Therefore, the security of payment can be improved with respect to danger such as information leakage, spoofing, falsification of data, and denegation.

In the embodiment, a seller and a buyer authenticated by the communication carrier must communicate with each other through only the payment server 5, and the payment server does not excessively transmit private information of the seller or the buyer. For this reason, privacy is protected in the payment.

In the embodiment, since the payment method of secondary payment can be changed upon completion of a primary payment transaction, the convenience of the entire payment system can be improved.

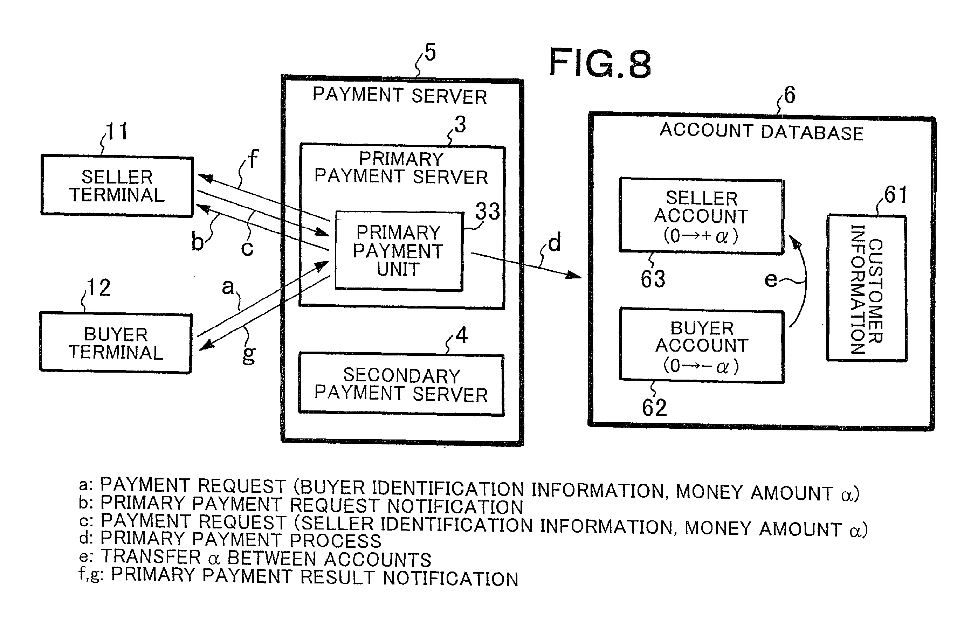

In the embodiment, in order to preferably understand the invention, the details of an operation of the primary payment server 3 in FIG. 1 serving as a characteristic part of the present invention will be concretely explained with reference to FIG. 8. Referring to FIG. 8, in relation to primary payment, only the seller terminal 11 in the system block diagram in FIG. 1, the buyer terminal 12, the payment server 5, and the account database 6 are extracted and shown. A case in which a user (buyer) of the buyer terminal 12 purchases a certain article from a user (seller) of the seller terminal 11 will be considered. In this case, the following information is stored in the account database 6.

As basic information, for each user, "account number", "customer number (ID)", "account state", "account opening date", "account balance", "designated balance", "identification information", "maximum credit limit", and the like are used. In addition, as customer information (indicated by 61 in FIG. 8), for each user, "customer number (ID)", "customer name", "customer address", "customer telephone number", "customer type", "account number", "correspondent financial institution", and the like are used. Furthermore, as detailed transaction information, "transaction number", "transaction type", "account number", "transaction balance", "transaction date", and the like are used. Still furthermore, as authentication information, "customer number (ID)", "customer authentication information", and the like are used.

When the user of the buyer terminal 12 wants to purchase an article from the user of the seller terminal 11, buyer identification information for specifying the buyer and a money amount a of an article (may include article information) are transmitted from the buyer terminal 12 to at least the primary payment server 3 of the payment server 5 to request payment (step a). At this time, it is assumed that authentications of the buyer and the seller are completed. The primary payment server 3 requests the credit server 2 to perform credit request for crediting the buyer (corresponding to step S10 in FIG. 6). The credit server 2 credits the buyer by using the buyer identification information of the buyer (step S11 in FIG. 6). This credit can be performed by determining whether the money amount α falls within preregistered "(account balance) + (maximum credit limit)" of the buyer. It can also be determined whether the buyer is put on a so-called blacklist.

Thereafter, primary payment shown in step S12 in FIG. 6 is executed. The primary payment unit 33 of the primary payment server 3 notifies the seller terminal 11 that primary payment is requested by the buyer terminal 12 (step b). The notified terminal 11 transmits a primary payment request including seller identification information for specifying the seller and the money amount α of the article to the primary payment server 3 (step c). In response to this, the primary payment unit 33 of the primary payment server 3 accesses the account database 6 to refer to the customer information 61 of the buyer and the seller, so that a buyer account 62 and a seller account 63 are specified (step d).

It is assumed that account balances of both the accounts 62 and 63 are 0 (zero). At this time, the money amount α of the article is withdrawn from the buyer account 62 to set the balance as "-α", and the money amount α is added to the seller account 63 to set the balance as "+α" (step e). The process in the step e, electrical numerical (amount) information of the account merely moves between the accounts, i.e., real-time payment is achieved by so-called closed-loop type electronic money. Therefore, the primary payment unit 33 notifies both the seller terminal 11 and the buyer terminal 12 of a primary payment result to notify the seller terminal 11 and the buyer terminal 12 that the primary payment is ended (steps f and g). The steps correspond to steps S13 and S14 in FIG. 6, respectively. In the above example, although a communication charge is omitted, actually, the communication charge of the communication carrier is included as a matter of course.

Also in a case in which a user of the buyer terminal 12 purchases another article from a user of the seller terminal, the processes are performed by the same procedure as described above, and a balance of the account of the buyer terminal 12 is "-α-β (β is a money amount of the other article), and a balance of the account of the other seller terminal is obtained by adding "β" to a current balance. Furthermore, since the terminal is a mobile communication terminal, the seller terminal 11 in FIG. 8 may also serve as a buyer terminal, and the buyer terminal 12 may also serve as a seller terminal. Therefore, in the balances of the accounts of the respective terminals, a money amount of a transacted article is added to the balance in the seller terminal, and the money amount is subtracted from the balance in the buyer terminal.

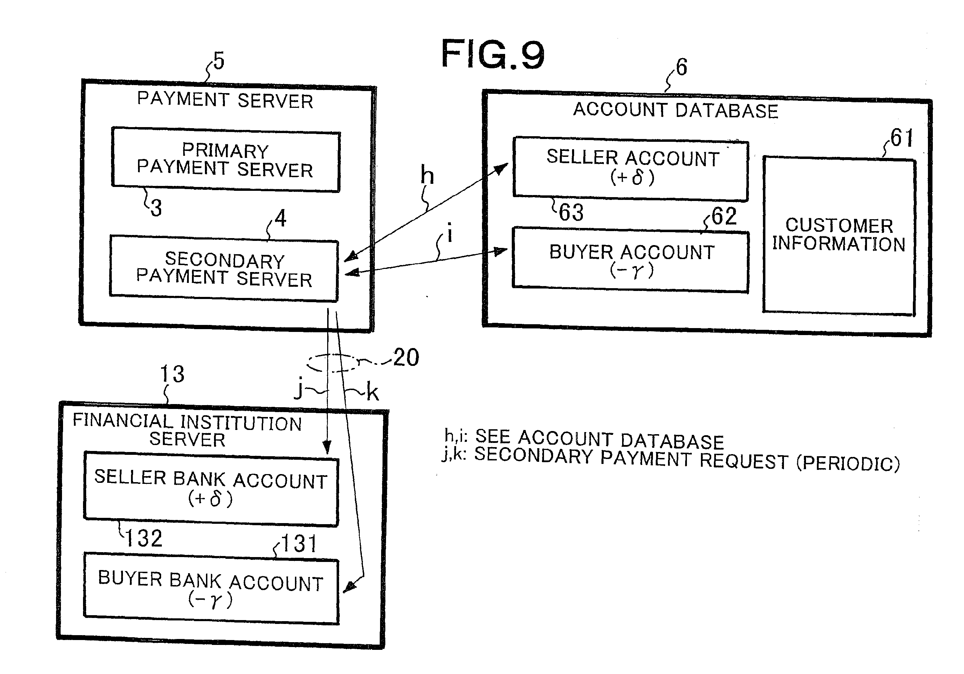

The above primary payment is continued for a predetermined period of time, for example, one month without secondary payment. When one month has passed, the secondary payment server in the payment server 5 is started. FIG. 9 is a diagram for explaining the details of an operation of the secondary payment server 4. In FIG. 9, only the payment server 5, the account database 6, and the financial institution server 13 in the system block in FIG. 1 related to the secondary payment are extracted and shown.

It is assumed that a balance of the buyer account 62 at this time is given by "-γ" and that a balance of the seller account 63 is given by "+δ". The secondary payment server 4 refers to the customer information 61, the buyer account 62, and the seller account 63 in the account database 6 to read information required for secondary payment in the financial institution server 13 (steps h and i), and requests the financial institution server 13 to make payment through a leased line 20 (steps j and k corresponding to step S21 in FIG. 7).

In the financial institution server 13, on the basis of the information sent from the secondary payment server 4 through a leased line 14, the money amount "γ" is subtracted from a buyer bank account 131, and the money amount "δ" is added to the seller bank account 132, so that a payment process is substantially initially performed by real money (corresponding to S22 in FIG. 7). The buyer terminal and the seller terminal is notified of the secondary payment result (corresponding to steps S23 and S24 in FIG. 7). Upon completion of the secondary payment, the accounts of the users in the account database 6 are reset to designated balances of the respective users.

As methods of the secondary payments, for example, (1) payment which is periodically, e.g., monthly, between a communication carrier and a designated correspondent financial institution (bank, post office, or the like), (2) payment including debit payment performed between a user and a financial institution designated by the user, (3) payment performed between a user of a buyer and a credit company designated by the user, (4) payment performed by prepaid electronic money designated by a user of a buyer, and the like are conceived. As the payment (3), finally, payment must be periodically, e.g., monthly, made between a credit company and a financial institution. As the payment (4), finally, payment must be periodically, e.g., monthly, made between a communication carrier and an electronic money company.

In this manner, as the methods of secondary payment serving as after-the-fact payment, various types are conceived. For this reason, a method of secondary payment can be arbitrarily selected, and the method of secondary payment can be changed after the fact depending on states of the user. Therefore, the convenience of the user is considerably improved.

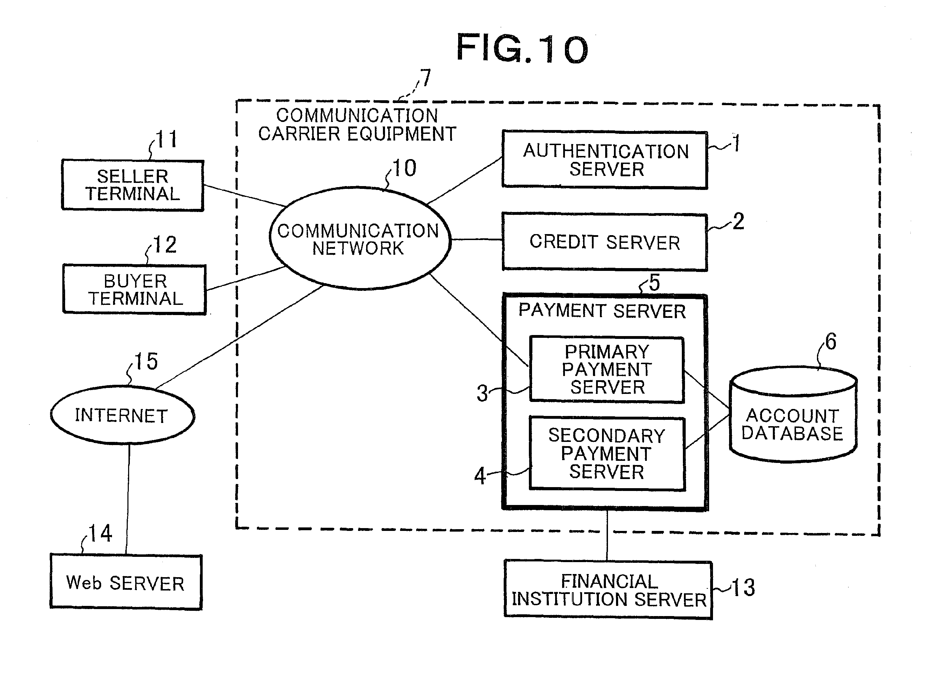

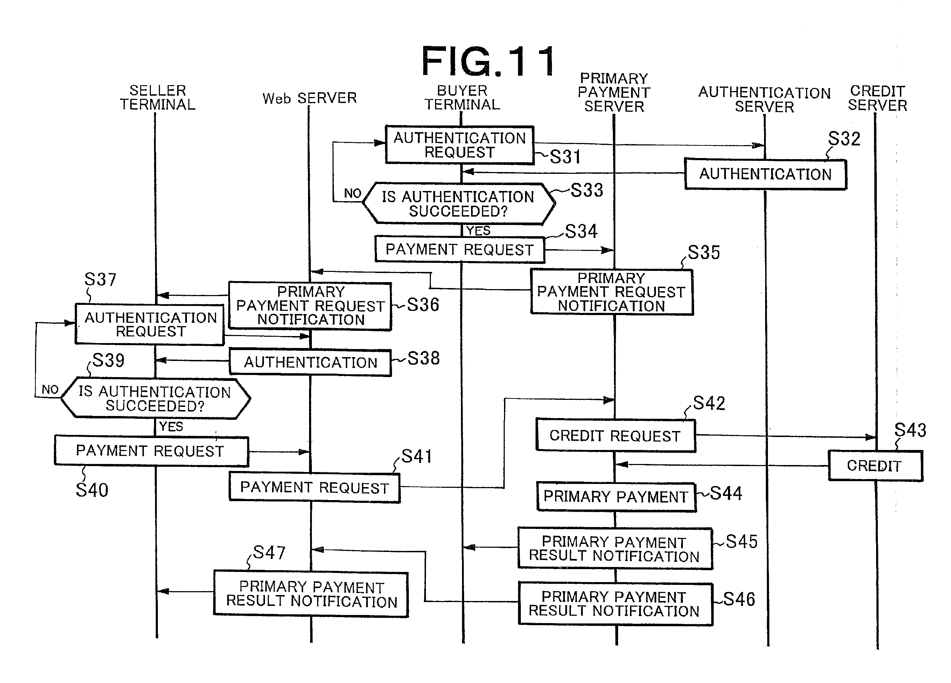

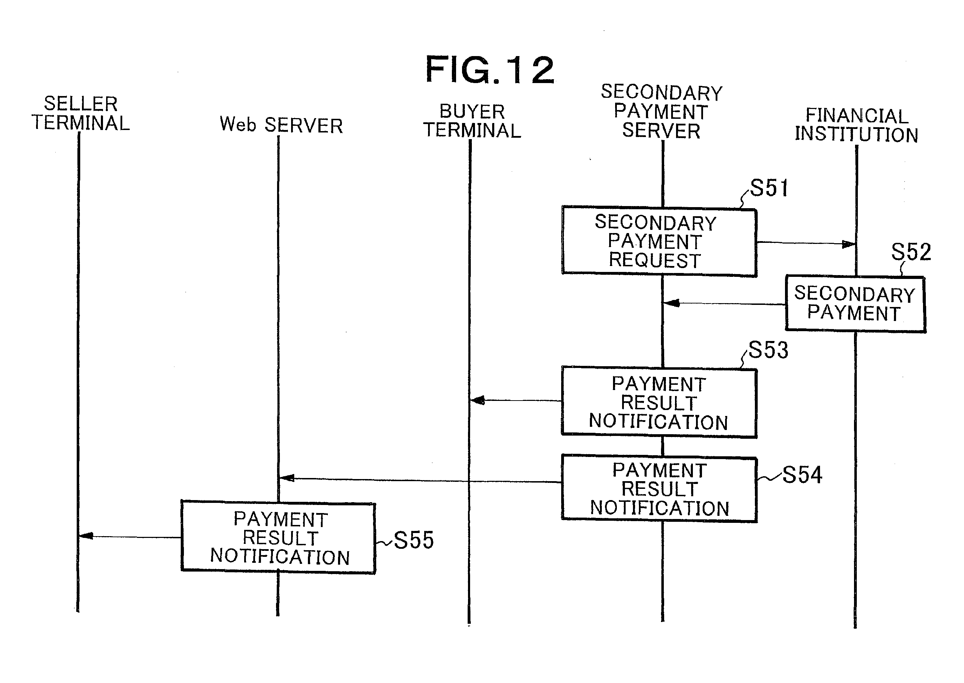

FIG. 10 is a system block diagram showing another embodiment of the present invention. The same reference numerals as in FIG. 1 denote the same parts in FIG. 10. In the embodiment, a Web server 14 having a so-called shopping site or a shopping mall is arranged and connected to the communication network 10 through the Internet 15. The other configuration is the same as that in FIG. 1. An operation sequence diagram in this case in FIGS. 11 and 12.

When a buyer terminal accesses the URL (Uniform Resource Locator) of a Web page of the Web server 14 to designate an article and a money amount so as to make payment, after a buyer authentication process shown in steps S31 to S33, a primary payment request notification from the primary payment server 3 arrives at the Web server 14 (steps S34 and S35), and a primary payment request notification from the Web server 14 arrives at the seller terminal 11 (step S37).

At this time, it is assumed that the Web server 14 asks the seller terminal 11 about information of an article and a money amount thereof by the buyer (asking about inventory check of the article and asking whether the money amount of the article by the buyer is good). Authentication of the seller at this time is performed in the Web server 14 (steps S37 to S39). The authentication in the Web server in this example is personal authentication but equipment authentication, and an existing Web site can be effectively used.

Upon completion of the authentication, a primary payment request including the information of the article and the money amount thereof is sent from the seller terminal 11 to the Web server 14 (step S40), and the primary payment request is sent from the Web server 14 to the primary payment server 3 (step S41). A subsequent primary payment process and a subsequent secondary payment process (FIG. 12) are the same as those in the previous embodiment. Notifications of a primary payment result and a secondary payment result are sent to the seller terminal 11 through the Web server 14 (steps S47 and S55).

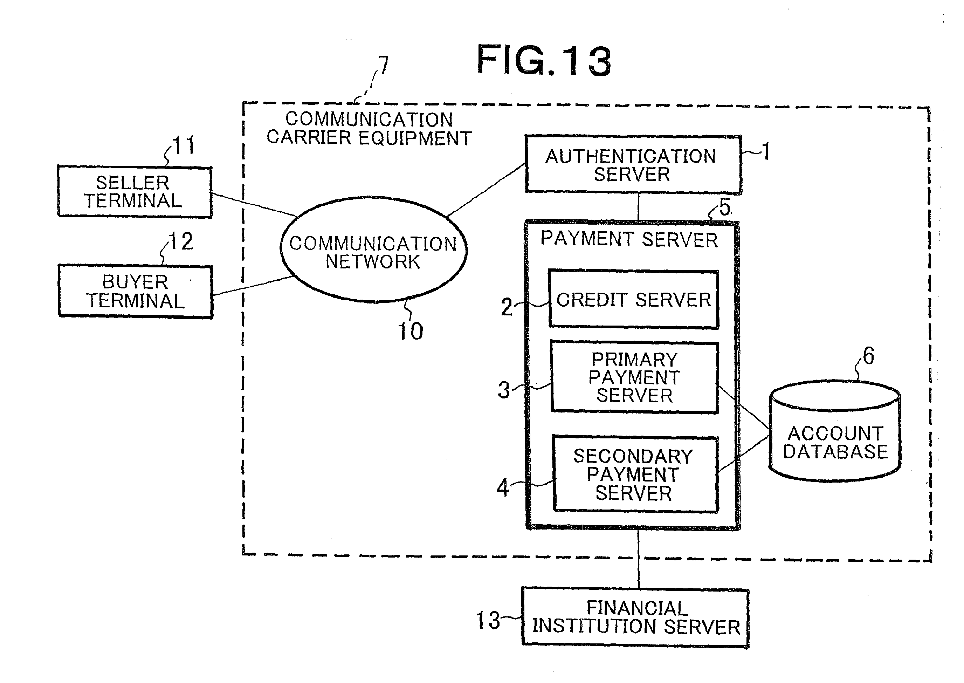

FIG. 13 is a system block diagram showing still another embodiment of the present invention. The same reference numerals as in FIG. 1 denote the same parts in FIG. 13. In the example in FIG. 1, in the communication carrier equipment 7, the authentication server 1, the credit server 2, and the payment server 5 are connected to the communication network 10. However, the example in FIG. 13 has a configuration in which only an authentication server 1 is connected to a communication network 10, a credit server 2 is arranged in a payment server 5, and the payment server 5 is connected to the authentication server 1 through a secure communication channel such as a leased line.

The authentication server 1 is caused to function as an SIP server, and terminals 11 and 12 are designed to have SIP functions, so that arbitrary identification information can be used as user identification information in place of information such as a telephone number or an electronic mail address to assure privacy. Not only one-to-one communication between a buyer and a seller, but also one-to-many communication or many-to-many communication can be performed. The system can also be applied to payment in sales of a so-called on-line auction type or the like.

In the embodiments described above, it is assumed that the authentication server 1 is caused to function as the SIP server and that mobile terminals having SIP functions are used as the terminals 11 and 12. In this case, the SIP server is caused to register the mobile terminals 11 and 12, and secret keys are given to the terminals to make it possible to encrypt information exchanged between the terminals and the server. As an encrypting method, for example, a secure communication channel conforming to, for example, an IPsec (IP security protocol) tunneling technique can be used. Also in an exchange of information between the terminals 11 and 12 (when information related to the article is exchanged before a payment request is performed), the same secure communication channel as described above can be formed between the terminals by the function of the SIP server.

As another modification, detachable IC chips are mounted on the terminals 11 and 12, identification information, and a personal certification, or authentication information of a user are stored in the IC chips, so that an authentication process can be easily performed by using the information. In this case, not only a holder (identical person), but also a person who borrows the terminal (with consent of the identical person) can make payment by using this terminal. Furthermore, when prepaid payment is selected as secondary payment, so-called open-loop type electronic money stored in the IC chip may be used in payment. The detachable IC chip mounted on the terminal is not limited to the above IC chip. Another detachable memory having a storing function may be used.

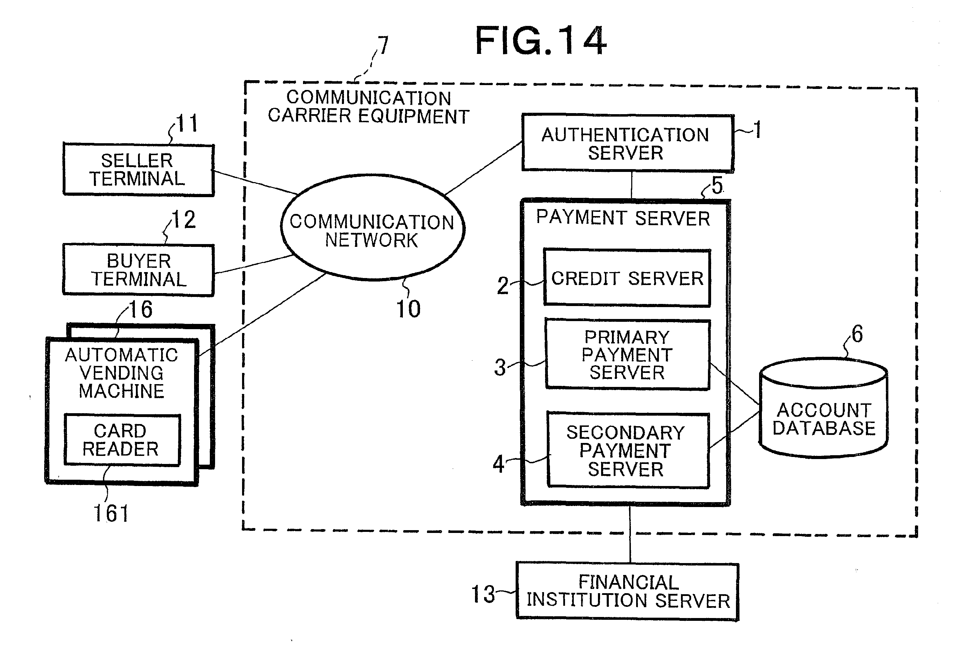

As still another embodiment of the present invention, an example which uses an automatic vending machine as a device on a seller terminal side will be described below. FIG. 14 is a system block diagram of the other embodiment. The same reference numerals as in FIG. 1 or 13 denote the same parts in FIG. 14. In this example, as a terminal device on the seller side, in addition to a seller terminal 11, one automatic vending machine 16 or a plurality of automatic vending machines 16 are arranged. The automatic vending machine 16 is connected to a communication network 10. In the example, the seller terminal 11 is used by a user for secondary payment notification, and the automatic vending machine 16 corresponds to the seller terminal in FIG. 1.

In the automatic vending machine 16, a card reader 161 which reads various cards such as a bar-code (including two-dimensional bar-code) printed card, a magnetic card, and an IC card is arranged. The card is held by a buyer. The card may be set in a buyer terminal 12. The other configuration is the same as that in FIG. 13. The automatic vending machine 16 may be arranged in the system configuration in FIG. 1 as a matter of course.

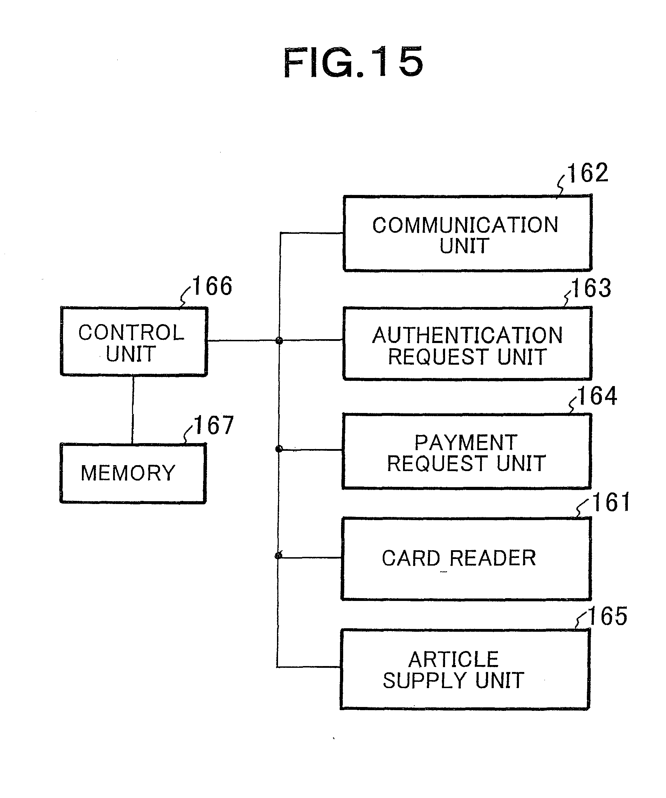

FIG. 15 is a functional block diagram of the automatic vending machine 16. The automatic vending machine 16 includes the card reader 161, a communication unit 162 which communicates with a communication network 10, an authentication request unit 163, a payment request unit 164, an article providing unit 165, a control unit 166 which controls the respective units, and a memory 167 which operates as a working memory of the control unit 166 and stores a control operation procedure of the control unit as a program.

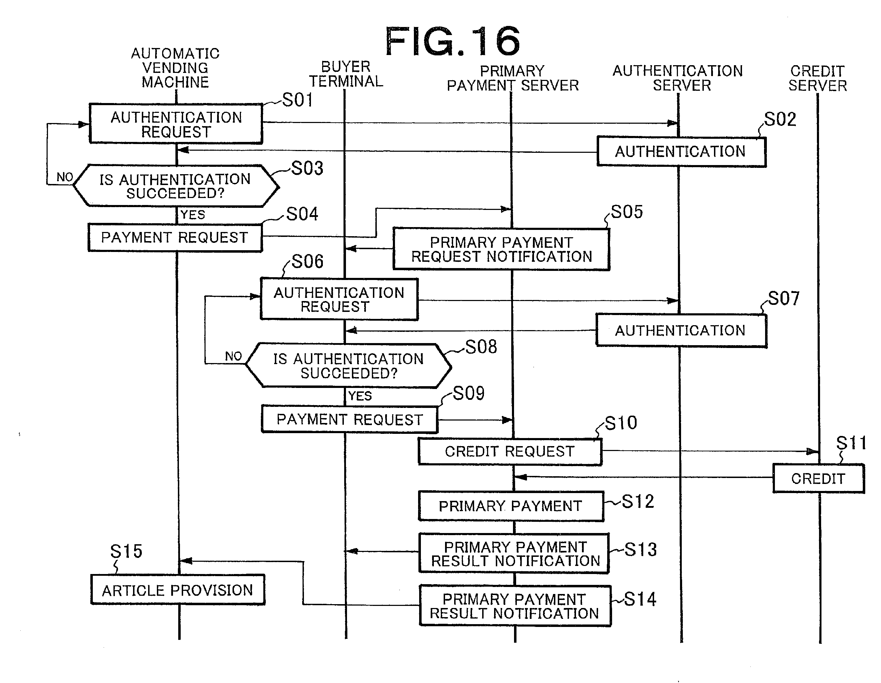

FIG. 16 is a flow chart showing an operation of the embodiment. The same reference numerals as in FIG. 6 denote the same steps in FIG. 16. In the example, the seller terminal in FIG. 6 is replaced with an automatic vending machine, and the other configuration is the same as that in FIG. 6. Referring to FIG. 16, an operation (steps S01 to 03) related to an authentication process of the automatic vending machine is performed as equipment authentication when the automatic vending machine 16 is connected to the communication network 10.

Payment request in step S04 is performed in response to a purchase desire button operation of the buyer after the card of the buyer is read by the card reader. In place of the card, identification information (for example, an electronic mail address) of the buyer may be caused to be input. As in FIG. 6, an authentication process and a credit process of the buyer, a primary payment process, and the like are performed to provide an article (step S15). The secondary payment process is performed in the same procedure as that of the operation in FIG. 7. With respect to a plurality of automatic vending machines, accounts of secondary payment in this case can be conveniently summed up as one account.

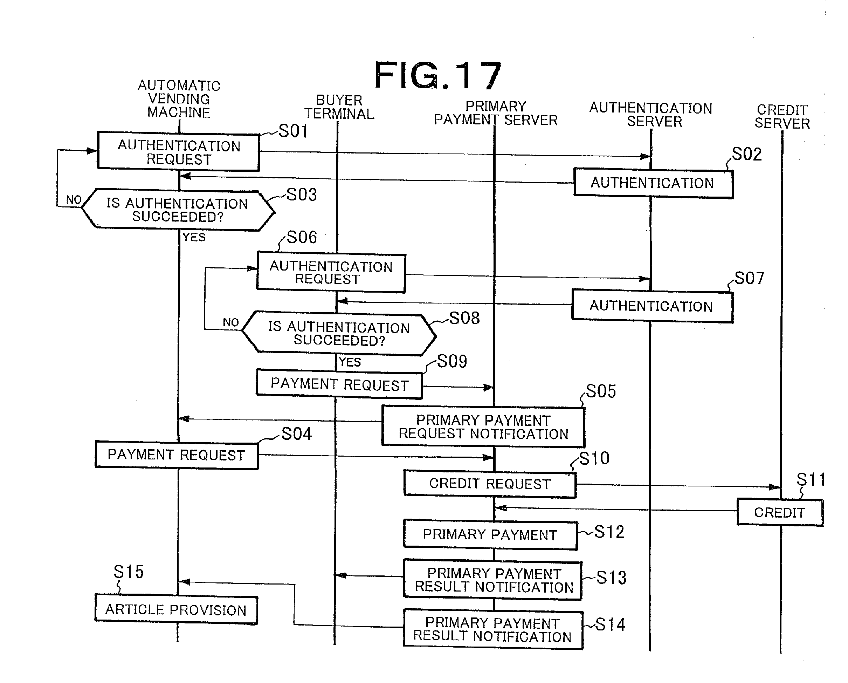

As a modification of the embodiment, a case in which no card reader 161 is arranged in the automatic vending machine 16 can be conceived. The example in FIG. 16 is a so-called automatic-vending machine-leading type example in which the card reader 161 of the automatic vending machine 16 reads the contents of a card to perform payment request (step S04). However, the example of the modification is a buyer-leading type example. An operation flow performed in this case is shown in FIG. 17. The same reference numerals as in FIG. 16 denote the same steps in FIG. 17.

After the processes in steps S01 to S03, when authentication is requested by the buyer terminal 12 (step S06), an authentication process is performed (steps S07 and S08). Thereafter, payment is requested by the buyer terminal (step S09). In this case, an address of the automatic vending machine is acquired and transmitted together with the payment request. Thereafter, steps S05 to S04 are executed to perform the processes in step S10 and subsequent steps. The payment request from the automatic vending machine in step S04 is possible such that a money amount is fixed by operating an article button by the buyer. A secondary payment process is performed by the same procedure as that of the operation in FIG. 7.

Furthermore, as still another embodiment, as shown in FIGS. 1, 10, 13, and 14, the various servers typified by the payment server are arranged as not only communication carrier equipment but also attached equipment directly connected to a communication carrier by a holding corporation of the communication carrier or an affiliate corporation of the communication carrier, as a matter of course.

As a matter of course, the operations of the terminals and the servers described above can be constructed such that the operation procedure of the operation is stored in a recording medium such as a ROM as a program and executed by causing a CPU serving as a computer to read the operation procedure.

As described above, payment is divided into primary payment performed by closed-loop type electronic money in only a communication carrier and actual secondary payment by a financial institution to make it possible to expect that convenience of users and earnings of the communication carrier are improved. As advantages of a user, a user need not care a balance of electronic money which is a payment account, and can make payment even though she/he does not have cash or a credit card on hand. Furthermore, since a trading partner is credited by the communication carrier, a user is advantageously free from risk such as a fraud, and a balance of an electronic money account for payment can be advantageously checked on real time. Furthermore, since a payment process is performed on real time, so-called losing out does not occur.

As advantages of the communication carrier, since existing equipment can be used, new business investment is small, and commission incomes can be expected by providing an authentication function and a credit function for payment, and demand for terminals of the communication carrier increases to expect incomes obtained by an increase in the sale of terminals. Furthermore, new users can be acquired due to enhancement of service, and incomes can be increased by enclosing users.

### INDUSTRIAL APPLICABILITY

As application fields of the present invention, an application to payment (prepaid payment, debit payment, or credit payment) of an arbitrary commercial transaction performed when a trading partner can be specified by a communication carrier or an application in which a certain user sends money to another user is conceived. This case corresponds to a case in which, in response to a transfer request (money sending request) from a communication terminal of a certain user to another user, a payment server performs a primary payment process between both the users, and, thereafter, secondary payment is made.

## Claims

1. An electronic payment system which performs an electronic payment process between users through a communication network, comprising:
a database which manages accounts for deposit/withdrawal information of the users; and
a payment server which performs a payment process between the users, and wherein
the payment server has primary payment means which, when the payment server receives a payment request from a communication terminal of the user through the communication network, refers to the accounts of the database to perform an electronic money payment process as primary payment between the users.

2. The electronic payment system according to claim 1, wherein
the communication terminal has means for transmitting a payment request including identification information of the user and payment amount information through the communication network,
the primary payment means of the payment server refers to an account of a user of the communication terminal on the database on the basis of the identification information to perform an increasing/reducing process of the money amount of the payment amount information to the user account.

3. The electronic payment system according to claim 1 or 2, further comprising:
means for forming a secure communication channel by encryption and tunneling technique to transmitted information between the communication terminals in an exchange of information between the communication terminals of the users.

4. The electronic payment system according to any one of claims 1 to 3, wherein
the payment server performs a payment operation by the payment means in response to a payment request from a communication terminal of a certain user to another user.

5. The electronic payment system according to any one of claims 1 to 4, further comprising:
authentication means which performs an authentication process for the user, and wherein a payment process by the payment server is performed after the authentication process.

6. The electronic payment system according to any one of claims 1 to 5, further comprising:
credit means which performs a credit process for the user, and wherein a payment process by the payment server is performed after the credit process.

7. An electronic payment system in which a certain user accesses a Web server of another user to perform an electronic payment process between the users through a communication network when an article on the Web server is purchased, comprising:
a database which manages accounts for deposit/withdrawal information of the users; and
a payment server which performs a payment process between the users, and wherein
the Web server has means for asking a communication terminal of the other user in response to the purchased article of the certain user and amount information of the article, and means for requesting the payment server to perform payment when the Web server receives a response to the asking from the communication terminal of the other user, and
the payment server has primary payment means which, when the payment server receives a payment request from the Web server, refers to the accounts of the database to perform an electronic money payment process as primary payment between the users.

8. The electronic payment system according to any one of claims 1 to 7, wherein
the payment server further has secondary payment means which, in response to becoming of a predetermined time limit, transmits balance information of an account and identification information of the user on the database at this time to a financial institution server to request secondary payment.

9. The electronic payment system according to any one of claims 1 to 8, wherein
a communication terminal when the user is a buyer is a mobile communication terminal, and a communication terminal when the user is a seller is one of a mobile communication terminal, a POS terminal, and an automatic vending machine.

10. The electronic payment system according to any one of claims 1 to 9, wherein
at least the payment server and the database are arranged as equipment of a communication carrier which manages the communication network, and a communication network between the communication terminal and the equipment is a secure communication channel.

11. An electronic payment method which performs an electronic payment process between users through a communication network, a database which manages accounts for deposit/withdrawal information of the users and a payment server which performs a payment process between the users being arranged, comprising:
in the payment server, the step of receiving a payment request from a communication terminal of the user through the communication network; and the primary payment step of referring to the accounts of the database to perform an electronic money payment process as primary payment between the users.

12. The electronic payment method according to claim 11, further comprising:
in the communication terminal, the step of transmitting a payment request including identification information of the user and payment amount information through the communication network, and wherein
in the primary payment step of the payment server, the payment server refers to an account of a user of the communication terminal on the database on the basis of the identification information to perform an increasing/reducing process of the money amount of the payment amount information to the user account.

13. The electronic payment method according to claim 11 or 12, further comprising:
the step of forming a secure communication channel by encryption and tunneling technique to transmitted information between the communication terminals in an exchange of information between the communication terminals of the users.

14. The electronic payment method according to any one of claims 11 to 13, wherein
the payment server performs the primary payment step in response to a transfer request from a communication terminal of a certain user to another user.

15. The electronic payment method according to any one of claims 11 to 14, further comprising:
the authentication step of performing an authentication process for the user, and wherein a payment process by the payment server is performed after the authentication process.

16. The electronic payment system according to any one of claims 11 to 15, further comprising:
the credit step of performing a credit process for the user, and wherein a payment process by the payment server is performed after the credit process.

17. An electronic payment method in which a certain user accesses a Web server of another user to perform an electronic payment process between the users through a communication network when an article on the Web server is purchased,
a database which manages accounts for deposit/withdrawal information of the users and a payment server which performs a payment process between the users being arranged,
in the Web server
comprising the step of asking a communication terminal of the other user in response to the purchased article of the certain user and amount information of the article, and the step of requesting the payment server to perform payment when the Web server receives a response to the asking from the communication terminal of the other user, and
in the payment server,
comprising the primary payment step of, when the payment server receives a payment request from the Web server, referring to the accounts of the database to perform an electronic money payment process as primary payment between the users.

18. The electronic payment method according to any one of claims 11 to 17, further comprising:
in the payment server, the step of, in response to becoming of a predetermined time limit, transmitting balance information of an account and identification information of the user on the database at this time to a financial institution server to request secondary payment.

19. The electronic payment method according to any one of claims 11 to 18, wherein
a communication terminal when the user is a buyer is a mobile communication terminal, and a communication terminal when the user is a seller is one of a mobile communication terminal, a POS terminal, and an automatic vending machine.

20. The electronic payment method according to any one of claims 11 to 19, wherein
at least the payment server and the database are arranged as equipment of a communication carrier which manages the communication network, and a communication network between the communication terminal and the equipment is a secure communication channel.

21. A payment server in an electronic payment system which performs an electronic payment process between users through a communication network, comprising:
primary payment means which, when the payment server receives a payment request from a communication terminal of the user through the communication network, refers to accounts of a database which manages accounts for deposit/withdrawal information of the users to perform an electronic money payment process as primary payment between the users.

22. The payment server according to claim 21, wherein
when the primary payment means receives a payment request including identification information of the user and payment amount information from the communication terminal of the user through the communication network, the primary payment means refers to an account of the user of the communication terminal on the database on the basis of the identification information to perform an increasing/reducing process of the money amount of the payment amount information to the user account.

23. The payment server according to claim 11 or 22, further comprising:
secondary payment means which, in response to becoming of a predetermined time limit, transmits balance information of an account and identification information of the user on the database at this time to a financial institution server to request secondary payment.

24. A communication terminal in a payment system which, when a payment server which makes electronic payment between users receives a payment request from a communication terminal of the user through the communication network, refers to accounts of a database which manages accounts for deposit/withdrawal information of the users to perform an electronic money payment process as primary payment between the users, comprising:
means for transmitting a payment request including user identification information or payment amount information to the payment server through the communication network.

25. The communication terminal according to claim 24, wherein
a communication terminal when the user is a buyer is a mobile communication terminal.

26. The communication terminal according to claim 24, wherein
a communication terminal when the user is a seller is one of a mobile communication terminal, a POS terminal, and an automatic vending machine.

27. A program to cause a computer to execute an operation of a payment server in an electronic payment system which performs an electronic payment process between users through a communication network, comprising:
a process which, when the payment server receives a payment request from a communication terminal of the user through the communication network, refers to accounts of a database which manages accounts for deposit/withdrawal information of the users; and a process constituting an electronic money payment process serving as primary payment between users.

28. A program to cause a computer to execute an operation of a communication terminal in a payment system in which, when a payment server which makes electronic payment between users receives a payment request from a communication terminal of the user through the communication network, refers accounts of a database which manages accounts for deposit/withdrawal information of the users to perform an electronic money payment process serving as primary payment between the users, comprising:
a process which transmits a payment request including user identification information or payment amount information to the payment server through the communication network.
